# EUROPÄISCHE PATENTSCHRIFT

(11) **EP 0 651 867 B1**
(45) Veröffentlichungstag und Bekanntmachung des Hinweises auf die Patenterteilung: **17.09.1997**
(21) Anmeldenummer: 93915868.9
(22) Anmeldetag: 09.07.1993
(51) Int. Cl.: F16J 15/32, B29D 31/00, B29C 33/00

(54) **DICHTRING UND VERWENDUNG DESSELBEN**
SEALING RING AND USE THEREOF
BAGUE D'ETANCHEITE ET SON UTILISATION

(30) Priorität: 18.07.1992 DE 4223709
(43) Veröffentlichungstag der Anmeldung: 10.05.1995
(73) Patentinhaber: Parker Hannifin GmbH, 33659 Bielefeld (DE)
(72) Erfinder: MÜLLER, Kurt, D-71686 Remseck 3 (DE)
(74) Vertreter: Wolff, Michael, Dipl.-Phys.
(86) Internationale Anmeldenummer: EP9301805
(87) Internationale Veröffentlichungsnummer: WO9402762

(56) Entgegenhaltungen:
- US-A- 2 521 248
- US-A- 4 178 003

## Beschreibung

Die Erfindung betrifft gummielastische oder thermoplastischelastische Dichtringe gemäß Oberbegriff des Anspruches 1 bzw. 2.

Bei den bisher bekannten, meist fluidtechnisch gebrauchten O-Ringen der zuvor genannten Arten müssen die beim Trennen der Hälften des Spritz- oder Gießwerkzeuges noch im Ring vorhandenen Grate (filmähnliches Material) und Anspritzpunkte (noppenähnliches Material) durch Nachbearbeitung des Rings zum fertigen Dichtring abgetragen werden. Dabei führt eine ungenügende Nachbearbeitung zum Verbleib eines Restes des Grates bzw. Anspritzpunktes und eine übermäßige Nachbearbeitung zur sogenannten Entgratung, bei der ein abgeflachter und oft rauher Oberflächenbereich entsteht. Der Erfindung liegt daher die Aufgabe zugrunde, die zuvor genannten Nachteile vermeidende Dichtringe der eingangs genannten Art zu schaffen, welche keine Nachbearbeitung des Rings erfordern und dennoch weder störende Grate bzw. Anspritzpunkte noch Entgratungen aufweisen.

Diese Aufgabe, ist erfindungsgemäß durch die Gegenstände des Anspruches 1 bzw. 2 gelöst.
Dadurch, daß jeder Grat oder Anspritzpunkt vollständig in einer Nut liegt, tritt dieses überschußmaterial an der äußeren Oberfläche des Dichtringes insbesondere auf einer Dichtfläche überhaupt nicht in Erscheinung und stört deshalb die Dichteigenschaften trotz seiner Existenz nicht im mindesten, so daß seine Entfernung überflüssig ist. Als besonderer Vorteil der erfindungsgemäßen Dichtringe wird angesehen, daß die an der Dichtfläche besonders wichtige Vulkanisationshaut des nicht mechanisch nachbearbeiteten Fertigteils erhalten bleibt. Infolgedessen verschleißt ein oberflächlich glatter erfindungsgemäßer Dichtring weniger als herkömmliche Dichtringe mit teilweiser oder vollständiger Entgratung.

Bei bevorzugten Ausführungsformen der erfindungsgemäßen Dichtringe liegen die beiden Nuten einander diametral gegenüber, insbesondere am Innen- bzw. Außendurchmesser, also dort, wo gewöhnlich Grate und Anspritzpunkte am Ring vorhanden sind. Gegebenenfalls verlaufen die beiden Nuten radial innen bzw. außen.
Bei bevorzugten Ausführungsformen der erfindungsgemäßen Dichtringe sind die umlaufenden beiden Kanten mindestens einer Nut als Dichtlippen ausgebildet, wodurch sich eine gegenüber einem gewöhnlichen O-Ring, der sich unter Vorspannung abplattet, erheblich verbesserten Dichtwirkung ergibt. Bei einer Variante des erfindungsgemäßen Dichtringes nach Anspruch 2 ist die einen Anspritzpunkt enthaltende Nut auf eine Oberflächenvertiefung je Anspritzpunkt verkürzt, falls sie keinen Trenngrat enthält.

Gegenstand der Erfindung ist auch die Verwendung der erfindungsgemäßen Dichtringe in der Weise, daß wenigstens eine Nut (enthält einen Trenngrat) oder Vertiefung (enthält einen Anspritzpunkt) als Schmierstoffdepot genutzt wird.

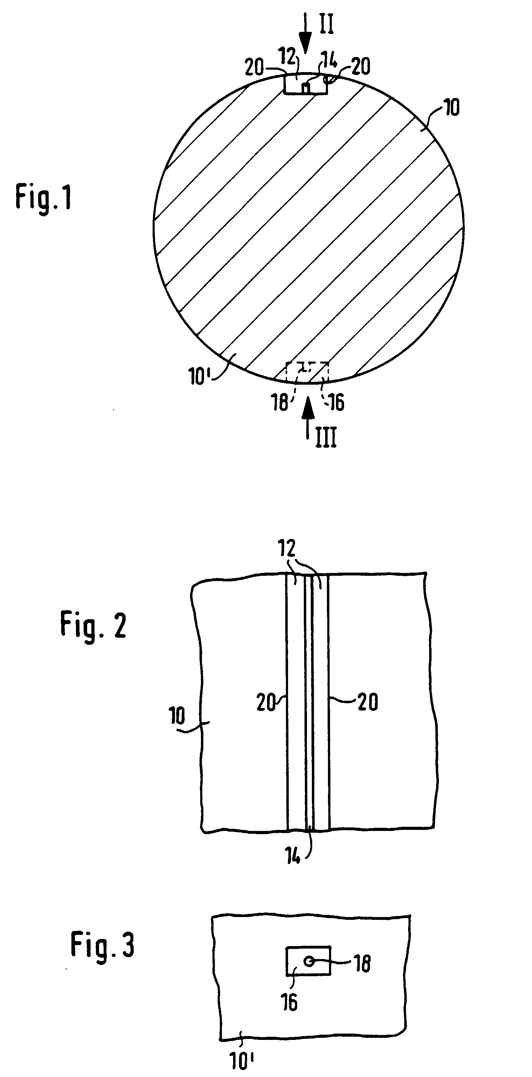

Im folgenden ist die Erfindung anhand einer durch die Zeichnung beispielhaft dargestellten Ausführungsform eines erfindungsgemäßen Dichtringes und einer Variante im einzelnen erläutert. Es zeigt in schematischer Darstellung
- Figur 1:: Oben und unten je einen halben Querschnitt durch die Ausführungsform bzw. Variante, welche zusammen das Dichtringprofil ergeben;
sowie
- Figuren 2 und 3:: Je eine Draufsicht auf einen Abschnitt der ebenen Abwicklung der radial äußeren bzw. inneren Profilhälfte der Ausführungsform bzw. Variante.

Das Ausführungsbeispiel ist ein O-Ring 10, an dessen radial äußerer Dichtfläche eine bezüglich des Außendurchmesseres symmetrische, rechteckig profilierte umlaufende Nut 12 ausgespart ist, in deren Mitte ein umlaufender Grat 14 sitzt, der nicht aus der Nut 12 herausragt.
Die Variante des Ausführungsbeispiels ist ein O-Ring mit einer bezüglich des Innendurchmessers symmetrisch angeordneten Vertiefung 16 der radial inneren Dichtfläche. In dieser Oberflächenvertiefung 16 sitzt ein Anspritzpunkt 18, der nicht herausragt.

Die Nutkanten 20 an der Ringoberfläche können als Dichtlippen ausgebildet sein.

## Patentansprüche

1. Gummielastischer dichtender O-Ring mit zwei umlaufenden Trenn-Graten (14) je an einer von zwei Oberflächenhälften, dadurch **gekennzeichnet,** daß jeder Trenn-Grat (14) in einer von zwei umlaufenden Nuten (12) vertieft angeordnet ist.

2. Thermoplastisch-elastischer Dichtring mit überwiegend rundem Profil, mit zwei umlaufenden undiametralen Trenn-Graten (14) je an einer von zwei Oberflächenhälften und mit wenigstens einem Anspritzpunkt (18) an der Oberfläche, dadurch **gekennzeichnet,** daß einer der beiden Trenn-Grate (14) und alle Anspritzpunkte (18) in je einer von zwei umlaufenden Nuten (12) bzw. Vertiefung (16) vertieft angeordnet sind.

3. Dichtring nach Anspruch 1 oder 2, dadurch gekennzeichnet, daß die beiden Nuten (12) einander diametral gegenüberliegen.

4. Dichtring nach Anspruch 3, dadurch gekennzeichnet, daß die beiden Nuten (12) radial innen bzw. außen verlaufen.

5. Dichtring nach einem der Ansprüche 1 bis 4, dadurch gekennzeichnet, daß die umlaufenden beiden Kanten (20) mindestens einer Nut (12) als Dichtlippen ausgebildet sind.

6. Dichtring nach einem der Ansprüche 2 bis 5, dadurch gekennzeichnet, daß die einen Anspritzpunkt enthaltende Nut auf eine Oberflächenvertiefung (16) je Anspritzpunkt verkürzt ist.

7. Verwendung des Dichtringes nach einem der Ansprüche 1 bis 6, dadurch gekennzeichnet, daß wenigstens eine Nut (12) oder Vertiefung (16) als Schmiermittelstoffdepot genutzt wird.

## Claims

1. A rubber-like O-ring seal with two circumferential separation ridges (14) each on one of two sealing surfaces, **characterised** in that each separation ridge (14) is recessed in one of two circumferential grooves (12).

2. A thermoplastic-elastic sealing ring with a predominantly round profile, having two circumferential non-diametric separation ridges (14) each on one of two surface halves and having at least one injection nodule (18) on the surface, **characterised** in that one of the two separation ridges (14) and all injection nodules (18) are recessed each in one of two circumferential grooves (12) or recesses (16).

3. A sealing ring as claimed in claim 1 or 2, characterised in that the two grooves (12) lie diametrically opposite one another.

4. A sealing ring as claimed in claim 3, characterised in that the two grooves (12) run radially on the interior or exterior.

5. A sealing ring as claimed in one of claims 1 to 4, characterised in that the two circumferential edges (20) of at least one groove (12) are designed as sealing lips.

6. A sealing ring as claimed in one of claims 2 to 5, characterised in that the groove containing an injection nodule is shortened to a surface recess (16) for each injection nodule.

7. Use of the sealing ring as claimed in one of claims 1 to 6, characterised in that at least one groove (12) or recess (16) is used to receive a lubricant.

## Revendications

1. Joint torique d'étanchéité en caoutchouc élastique, avec deux bavures de séparation (14) périphériques respectivement disposées sur l'une des deux moitiés de surface, caractérisé en ce que chaque bavure de séparation (14) se situe en profondeur dans l'une de deux rainures (12) périphériques.

2. Bague d'étanchéité thermoplastique et thermoélastique d'un profil essentiellement rond, avec deux bavures de séparation périphériques (14), non diamétrales, respectivement disposées sur l'une des deux moitiés de surface, et avec un point d'injection (18) au moins en surface, caractérisée en ce que l'une des deux bavures de séparation (14) et tous les points d'injection (18) se situent respectivement en profondeur dans l'une des deux rainures périphériques (12) et/ou cavités (16).

3. Bague d'étanchéité suivant l'une des revendications 1 et 2, caractérisée en ce que les deux rainures (12) sont diamétralement opposées.

4. Bague d'étanchéité suivant la revendication 3, caractérisée en ce que les deux rainures (12) se situent dans le sens radial interne et/ou externe.

5. Bague d'étanchéité suivant l'une des revendications 1 à 4, caractérisée en ce que les deux arêtes périphériques (20) d'au moins une rainure (12) sont réalisées sous forme de lévres d'étanchéité.

6. Bague d'étanchéité suivant l'une des revendications 2 à 5, caractérisée en ce que la rainure, comportant un point d'injection, est réduite à une cavité superficielle (16) par point d'injection.

7. Utilisation de la bague d'étanchéité suivant l'une des revendications 1 à 6, caractérisée en ce qu'une rainure (12) ou une cavité (16), au moins, est utilisée comme dépôt de lubrifiant.
